# EUROPEAN PATENT APPLICATION

(11) **EP 4 477 524 A1**
(43) Date of publication of application: **18.12.2024**
(21) Application number: 22925082.4
(22) Date of filing: 17.10.2022
(51) Int. Cl.: B63B 21/50, F03D 13/25, F03D 80/00, B63B 21/20, B63B 35/44

(54) **FLOATING-TYPE OFFSHORE WIND POWER MOORING SYSTEM CAPABLE OF REDUCING YAW MOTION**

(30) Priority: 07.02.2022 KR 20220015420
(71) Applicant: Korea Institute of Ocean Science & Technology, Busan 49111 (KR); Front Energies Llc, Houston, Texas 77084 (US)
(72) Inventor: KIM, Kyong Hwan, Daejeon 34061 (KR); PARK, Se Wan, Daejeon 34195 (KR); HA, Yoon Jin, Daejeon 34073 (KR); PARK, Ji Yong, Daejeon 34198 (KR); ROH, Chan, Sejong 30126 (KR); AHN, Hyeon Jeong, Changwon-si Gyeongsangnam-do 51778 (KR); LIM, Chang Hyuck, Sejong 30150 (KR); KIM, Jang Whan, Spring, Texas 77379 (US); KYOUNG, Jo Hyun, Katy, Texas 77494 (US); BAQUET, Aldric, Houston, Texas 77055 (US); SHEN, Zhirong, Cypress, Texas 77433 (US)
(74) Representative: Novagraaf Technologies
(86) International application number: PCT/KR2022/015742
(87) International publication number: WO 2023/149615

(57) **Abstract**

The present invention provides a floating-type offshore wind power mooring system capable of reducing a yaw motion, the system comprising: a floating body comprising three columns, disposed at the vertices of a triangle, respectively, and three pontoon units, disposed in a triangular shape to connect the multiple columns; and a wind power generation unit disposed in any one of the three columns and comprising a mooring unit, wherein: the mooring unit comprises a first mooring line, a second mooring line, a third mooring line, and a connection unit; the first mooring line has one end connected to any one of the three columns; the second mooring line has one end connected to another of the three columns; the third mooring line has one end connected to the seabed; and the connection unit connects the other end of the first mooring line, the other end of the second mooring line, and the other end of the third mooring line so that the first mooring line, the second mooring line, and the third mooring line are arranged in a Y-shape when viewed from above.

## Description

### [Technical Field]

Embodiments relate to a floating-type offshore wind power mooring system capable of reducing a yaw motion and to floating-type offshore wind power mooring system capable of reducing a yaw motion, in which a plurality of pontoon units are disposed to support a wind turbine.

### [Background Art]

A floating-type offshore wind structure is a structure that floats at sea and is a device for supporting a wind turbine. A tower of the wind turbine is fixed to a floating body. The movement of the floating-type offshore wind structure is controlled by a mooring system.

The floating body may be formed by combining a plurality of columns and connectors connecting the columns. Each column is a buoyant body with a cavity therein. The tower of the wind turbine may be fixed to any one of the plurality of columns.

Japanese Patent Application Laid-Open No. 2010-280301 (2010.12.16) discloses a floating body including one column disposed at the center thereof and three columns near the center. The tower of the wind turbine is fixed to the column disposed at the center. The floating-type offshore wind structure is fixed to the seabed through a mooring line.

When the wind turbine operates, even when the floating body is fixed through the mooring line, a yaw motion that the floating body shakes in a left-right direction occurs. When the yaw motion occurs as described above, there is a problem of reduced power generation efficiency.

### [Disclosure]

### [Technical Problem]

Embodiments are directed to providing a floating-type offshore wind power mooring system capable of reducing a yaw motion, which may increase power generation efficiency by reducing a yaw motion.

The object of the present invention is not limited to the above-described object, and other objects that are not mentioned will be able to be clearly understood by those skilled in the art from the following description.

### [Technical Solution]

An embodiment may provide include a floating-type offshore wind power mooring system capable of reducing a yaw motion, which includes a floating body having buoyancy at sea, and a wind power generation unit fixed to the floating body, wherein the floating body includes three columns disposed at vertex locations of a triangle, respectively, and three pontoon units disposed in a triangular shape to connect the plurality of columns, the wind power generation unit is disposed on any one of the three columns, and includes a mooring unit connecting the column to a seabed, the mooring unit includes a first mooring line, a second mooring line, a third mooring line, and a connection portion, the first mooring line has one end connected to any one of the three columns, the second mooring line has one end connected to another of the three columns, the third mooring line has one end connected to the seabed, the connection portion connects the other end of the first mooring line, the other end of the second mooring line, and the other end of the third mooring line, and when viewed from above, the first mooring line, the second mooring line, and the third mooring line are disposed in a Y shape.

With respect to a connection point connected to the connection portion, the third mooring line may be partitioned into a first area from the seabed to the connection point, and a second area from the connection point to an end of the third mooring line, and the third mooring line may be coupled to the connection portion to change a length of the first area and a length of the second area.

A shape of the first mooring line and a shape of the second mooring line may each differ from a shape of the third mooring line.

A length of the first mooring line and a length of the second mooring line may be the same.

The mooring unit may be disposed to correspond to each of the three pontoon units.

A cross section of the column may be polygonal.

### [Advantageous Effects]

According to the embodiments, by connecting the mooring line to each of the columns disposed on both end portions of the pontoon unit that forms a triangle, re-fixing the same to the seabed through the separator mooring line, and arranging the mooring lines to have the Y shape, there is an advantage that it is possible to reduce the yaw motion during wind power generation.

According to the embodiments, by connecting the first mooring line and the second mooring line that are connected to the column through the third mooring line fixed to the seabed and constituting the length of the third mooring line to be adjusted, there is an advantage that the floating-type offshore wind structure can be easily installed.

According to the embodiments, by configuring the first mooring line and the second mooring line that are connected to the column as the wire, there is an advantage that it is possible to reduce the number of chain-shaped mooring lines.

According to the embodiments, since the chain-shaped third mooring line is connected to the column by hooking up the first mooring line and the second mooring line that are connected to the column without being directly connected thereto, there is an advantage that mooring work is easy.

### [Description of Drawings]

FIG. 1 is a view showing a floating-type offshore wind power mooring system capable of reducing a yaw motion according to one embodiment.
FIG. 2 is a view showing a state in which a floating body and a wind power generation unit is moored by a mooring unit.
FIG. 3 is a view showing the floating body and the wind power generation unit when viewed from above.
FIG. 4 is a view showing the floating body docked to a docking facility.
FIG. 5 is a view showing a state in which a tower is installed on the floating body.
FIG. 6 is a view showing a state in which a turbine is installed on the floating body.
FIG. 7 is a side view showing a floating-type offshore wind structure moved to an installation site by a tow boat.
FIG. 8 is a plan view showing the floating-type offshore wind structure moved to the installation site by the tow boat.
FIGS. 9 to 11 are views showing a process of hooking up a first mooring line and a second mooring line to a third mooring line at the installation site.
FIGS. 12 and 13 are views showing a process of connecting two mooring units to the floating body and then connecting the floating body to the remaining one mooring unit.
FIGS. 14 and 15 are views showing a process of connecting the third mooring line to the first mooring unit and the second mooring unit of the remaining one mooring unit and then adjusting tension.

### [Mode for Invention]

Hereinafter, exemplary embodiments according to the present invention will be described in detail with reference to the accompanying drawings.

However, the technical spirit of the present invention is not limited to some of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be construed as meaning that may be generally understood by those skilled in the art to which the present invention pertains unless explicitly specifically defined and described, and the meanings of the commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in the phrase, and when described as "at least one (or one or more) of A, B, and C," one or more among all possible combinations of A, B, and C may be included.

In addition, terms such as first, second, A, B, (a), and (b) may be used to describe components of the embodiments of the present invention.

These terms are only for the purpose of distinguishing one component from another component, and the nature, sequence, order, or the like of the corresponding components is not limited by these terms.

In addition, when a first component is described as being "connected," "coupled," or "joined" to a second component, it may include a case in which the first component is directly connected, coupled, or joined to the second component, but also a case in which the first component is "connected," "coupled," or "joined" to the second component by other components present between the first component and the second component.

In addition, when the first component is described as being formed or disposed on "on (above) or below (under)" the second component, "on (above)" or "below (under)" may include not only a case in which two components are in direct contact with each other, but also a case in which one or more third components are formed or disposed between the two components. In addition, when described as "on (above) or below (under)," it may include the meaning of not only an upward direction but also a downward direction based on one component.

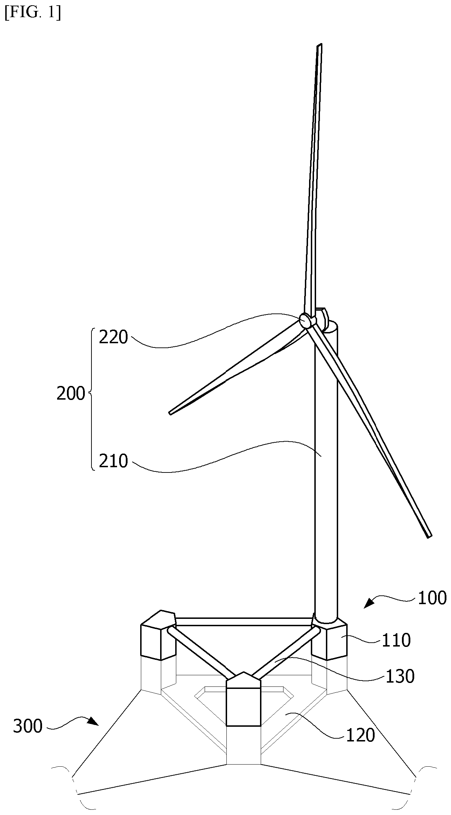

FIG. 1 is a view showing a floating-type offshore wind power mooring system capable of reducing a yaw motion according to one embodiment.

Referring to FIG. 1, a floating-type offshore wind structure according to an embodiment may include a floating body 100, a wind power generation unit 200, and a mooring unit 300.

The floating body 100 may be a buoyant body including a cavity therein. The floating body 100 may include three columns 110, three pontoon units 120, and a plurality of connectors 130.

The three columns 110 may each have a cylindrical shape. The three columns 110 are disposed to be located at vertices of a triangle, respectively, when viewed from above. The wind power generation unit 200 may be disposed on any one of the three columns 110. A cross section of the column 110 may be polygonal.

The three pontoon units 120 connect the three columns 110 to form sides of an equilateral triangle, respectively, when viewed from above. The pontoon unit 120 may have a bar-shaped shape with a constant thickness in a vertical direction. In addition, each pontoon unit 120 may have a quadrangular cross-section and have flat upper and lower surfaces.

At least some of the pontoon units 120 and the columns 110 are submerged in water to generate buoyancy.

The plurality of connectors 130 serves to increase the rigidity of the floating body 100 and secure structural stability by connecting the columns 110. The connectors 130 may also be disposed to be rotationally, symmetrically with respect to a center C of the triangle formed by the pontoon unit 120, thereby balancing a load applied to the floating body 100.

The wind power generation unit 200 may include a tower 210 fixed to any one of the three columns 110 and a nacelle 220 disposed on the tower 210.

The mooring unit 300 fixes the floating body 100 to the seabed. The floating body 100 may be moved only within a predetermined range by the mooring unit 300.

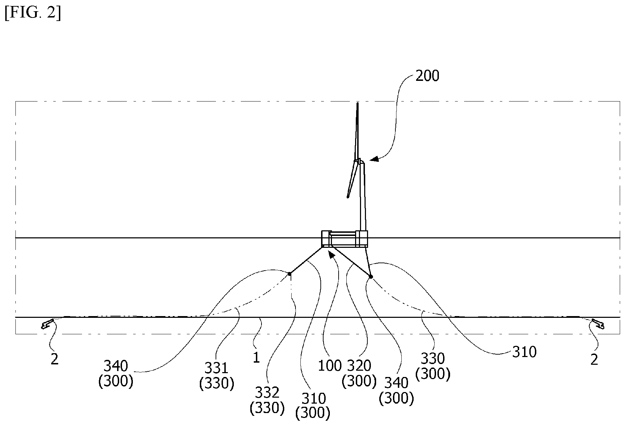

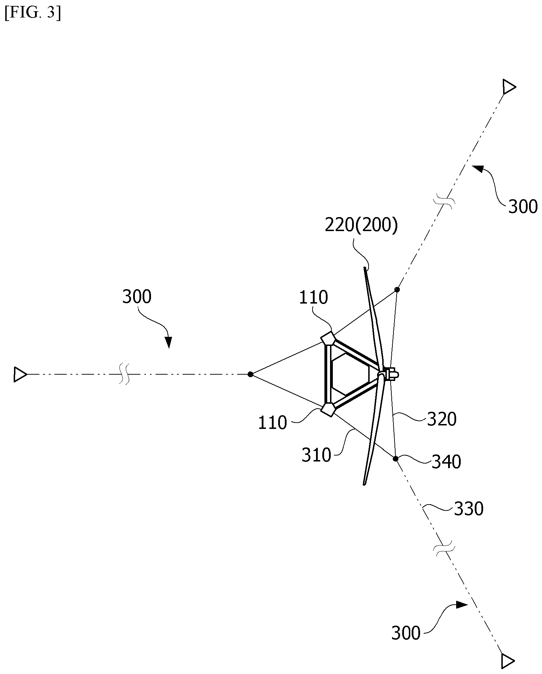

FIG. 2 is a view showing a state in which the floating body 100 and the wind power generation unit 200 are moored by the mooring unit 300, and FIG. 3 is a view showing the floating body 100 and the wind power generation unit 200 when viewed from above.

Referring to FIGS. 2 and 3, the mooring unit 300 is disposed to correspond to each of the three pontoon units 120 forming a triangle.

Each mooring unit 300 may include a first mooring line 310, a second mooring line 320, a third mooring line 330, and a connection portion 340. The first mooring line 310, the second mooring line 320, and the third mooring line 330 are disposed to entirely have a Y-shape. The mooring units 300 may be disposed to correspond to the three pontoon units 120 to fix the floating body 100, thereby significantly reducing a yaw motion during wind power generation.

The first mooring line 310 has one end connected to any one of the three columns 110 and the other end connected to the connection portion 340.

The second mooring line 320 has one end connected to another of the three columns 110 and the other end connected to the connection portion 340. The first mooring line 310 and the second mooring line 320 may be formed of a wire rope unlike the chain-shaped third mooring line 330. Therefore, there is an advantage in reducing the number of chain-shaped mooring lines such as the third mooring line 330.

Since the first mooring line 310 is connected to any one of the three columns 110 and the second mooring line 320 is connected to another of the three columns 110, the first mooring line 310 is located at one side of the pontoon unit 120, and the second mooring line 320 is located at the other side of the pontoon unit. Therefore, when viewed from above, the pontoon unit 120, the first mooring line 310, and the second mooring line 320 are disposed to form a triangle. There is an advantage that the mooring unit 300 has a stronger structure against a yaw motion than a structure connecting the column 110 to the seabed using a single mooring line.

The third mooring line 330 has one end connected to an anchor 2 installed on the seabed 1 and the other end connected to the connection portion 340. The third mooring line 330 may be configured in the form of a chain and may have a shape different from those of the first mooring line 310 and the second mooring line 320.

A length of the first mooring line 310 and a length of the second mooring line 320 may be the same. A material of the first mooring line 310 and a material of the second mooring line 320 may be the same. The shape of the first mooring line 310 and the shape of the second mooring line 320 may be the same.

The connection portions 340 connects the first mooring line 310, the second mooring line 320, and the third mooring line 330. Therefore, when the first mooring line 310, the second mooring line 320, and the third mooring line 330 are disposed to entirely have a Y shape, the connection portion 340 may be located at the center thereof. The connection portion 340 may have a triangular plate shape.

Meanwhile, the third mooring line 330 may be partitioned into a first area 331 and a second area 332. With respect to a connection point connected to the connection portion 340, the first area 331 can be defined as a partial area of the third mooring line 330 from the seabed 1 to the connection point, and the second area 332 can be defined as the second area 332 extending from the connection point to an end of the third mooring line 330.

In the process of hooking up the first mooring line 310 and the second mooring line 320 to the third mooring line 330, since the third mooring line 330 is connected to the connection portion 340 so that a length of the first area 331 and a length of the second area 332 are adjusted, there is an advantage that the tension of the mooring unit 300 is easily adjusted and mooring work is easy.

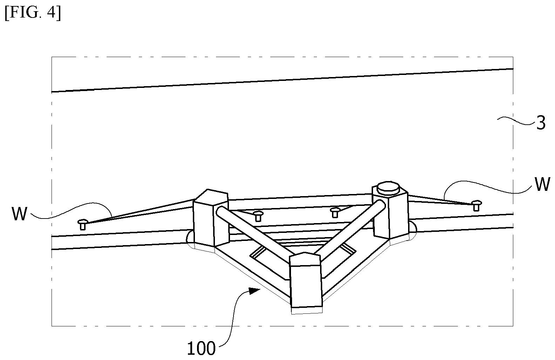

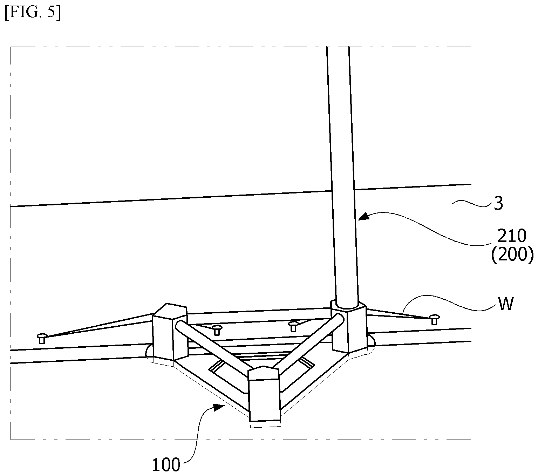

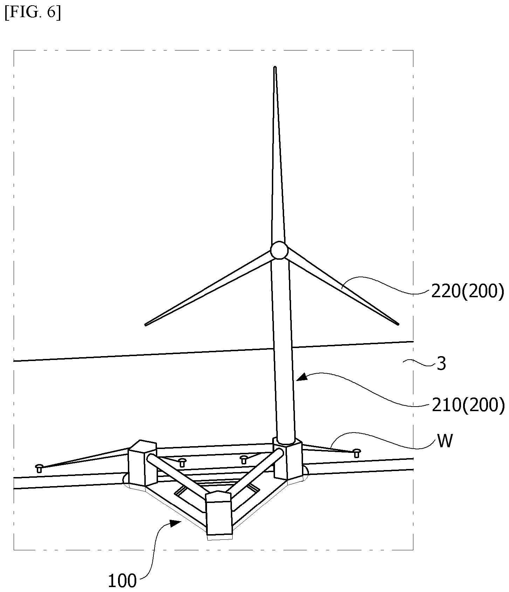

FIG. 4 is a view showing the floating body 100 docked to a docking facility, FIG. 5 is a view showing a state in which a tower is installed on the floating body 100, and FIG. 6 is a view showing a state in which a turbine is installed on the floating body 100.

Referring to FIG. 4, in an assembly process of the floating-type offshore wind structure, first, the floating body 100 may be docked to a docking facility 3. The floating body 100 may be fixed to the docking facility 3 through a wire W. Since the triangular floating body 100 may be docked as close as possible to the docking facility 3, there is an advantage that a distance to a crane is very close, thereby facilitating assembly.

Referring to FIG. 5, the tower 210 may be assembled through the crane in a state in which the floating body 100 has been fixed to the docking facility 3. The tower 210 may be assembled to the column 110 close to docking facility 3. In this case, ballasting of the columns 110 may be adjusted.

Referring to FIG. 6, in a state in which the tower 210 has been assembled to the floating body 100, the nacelle 220 is assembled to the tower 210. In this case, ballasting of the columns 110 may be adjusted. Since the tower 210 is located close to the docking facility 3, the nacelle 220 is easily assembled to the tower 210 using the crane.

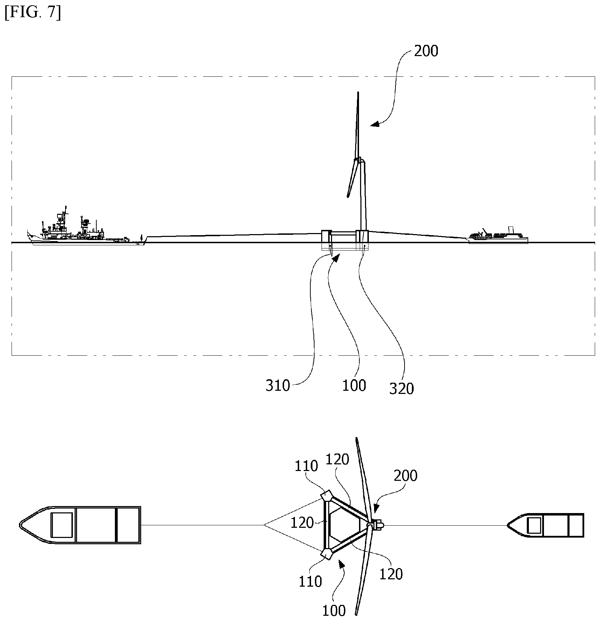

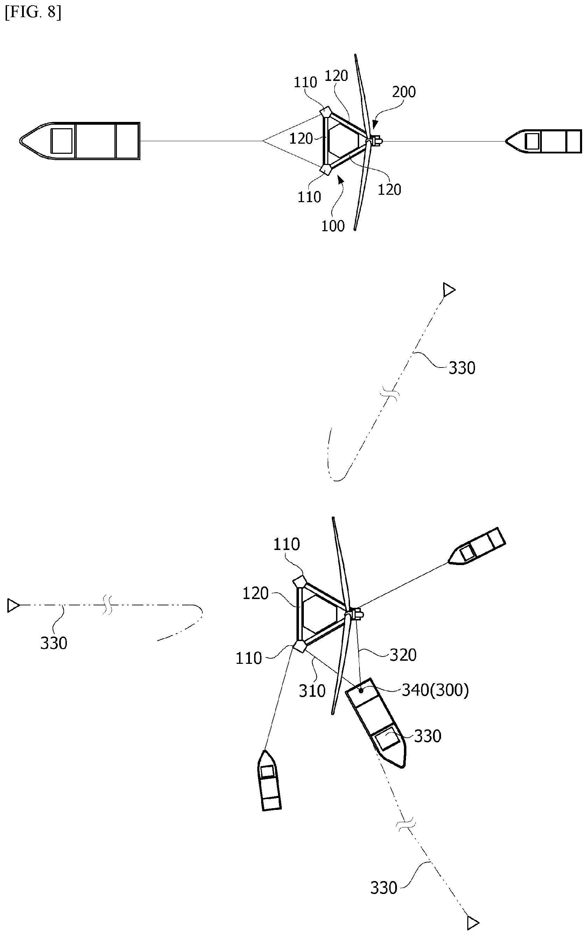

FIG. 7 is a side view showing a floating-type offshore wind structure moved to an installation site by a tow boat, and FIG. 8 is a plan view showing the floating-type offshore wind structure moved to the installation site by the tow boat.

Referring to FIGS. 7 and 8, the assembled floating-type offshore wind structure is pulled by the tow boat and moved to the installation site. The tow boat may tow the floating-type offshore wind structure from the front, and another tow boat may move while supporting the floating-type offshore wind structure.

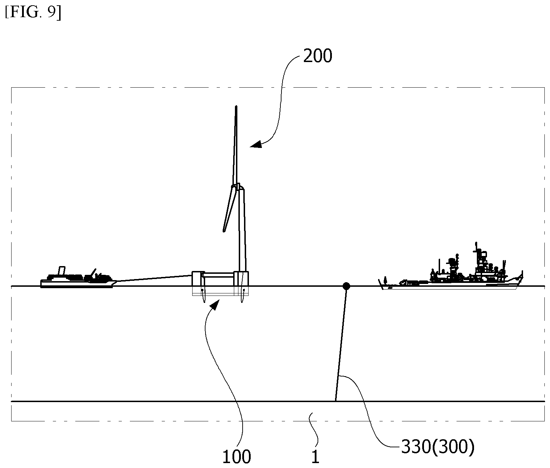

FIGS. 9 to 11 are views showing a process of hooking up the first mooring line 310 and the second mooring line 320 to the third mooring line 330 at the installation site.

As shown in FIG. 9, the tow boat tows the floating-type offshore wind structure to an installation point at which the third mooring line 330 is installed. At the installation point, three third mooring lines 330 may be installed near vertices of the triangle, respectively.

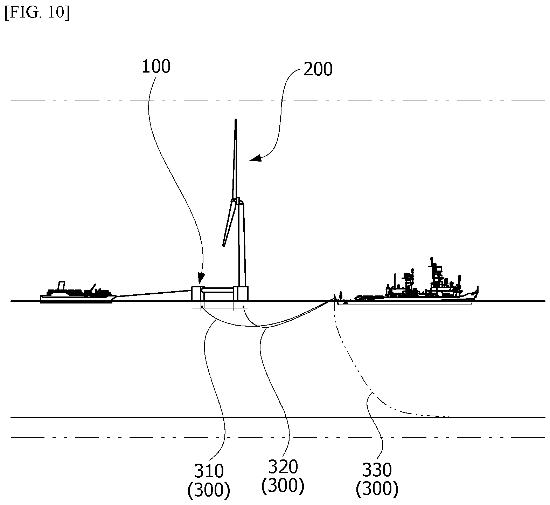

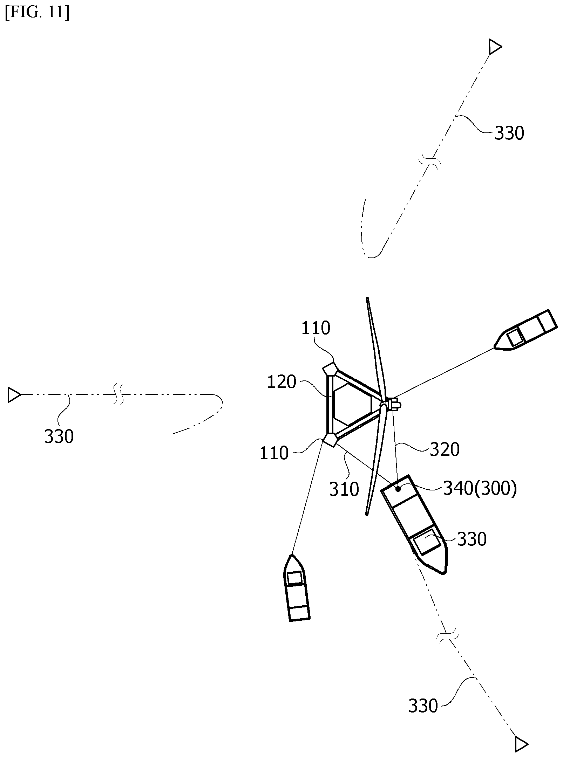

In addition, as shown in FIGS. 10 and 11, the first mooring line 310 and the second mooring line 320 are fixed to the connecting portion 340, and then the connecting portion 340 is connected to the third mooring line 330.

In the same way, another third mooring line 330 is connected to another first mooring line 310 and second mooring line 320 through the connection portion 340. As described above, since the chain-shaped third mooring line 330 is not directly connected to the column 110 but is connected by hooking up the first mooring line 310 and the second mooring line 320 that are connected to the column 110, there is an advantage that mooring work is easy.

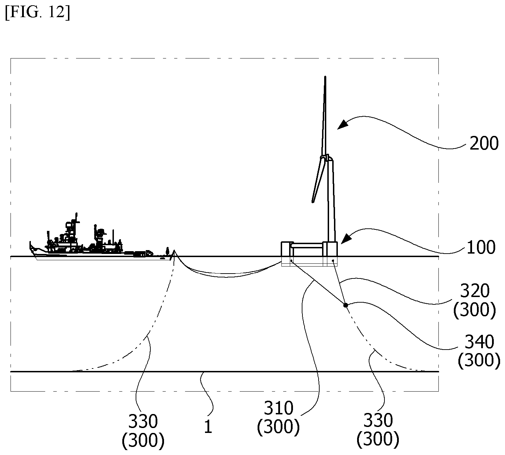

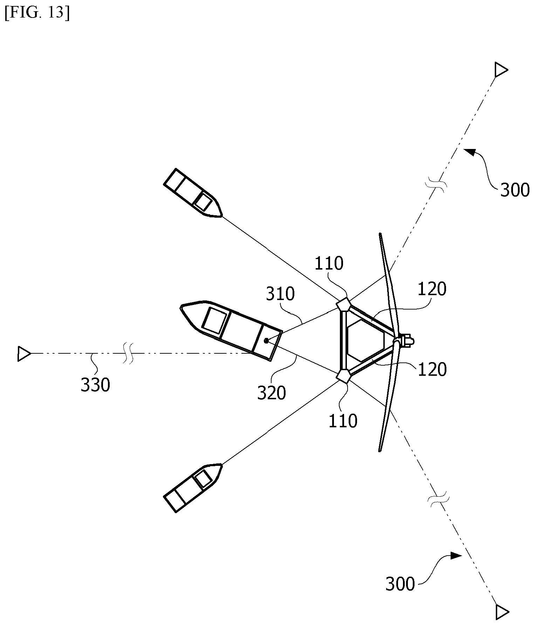

FIGS. 12 and 13 are views showing a process of connecting two mooring units 300 to the floating body 100 and then connecting the floating body 100 to the remaining one mooring unit 300.

Referring to FIGS. 12 and 13, after the two mooring units 300 are connected to the floating body 100, the floating body 100 is connected to the last remaining third mooring line 330 by towing the first mooring line 310 and the second mooring line 320 of the remaining one mooring unit. The tow boat may tow the first mooring line 310 and the second mooring line 320 and guide the same toward the third mooring line 330, and other towing boats may support the columns 110.

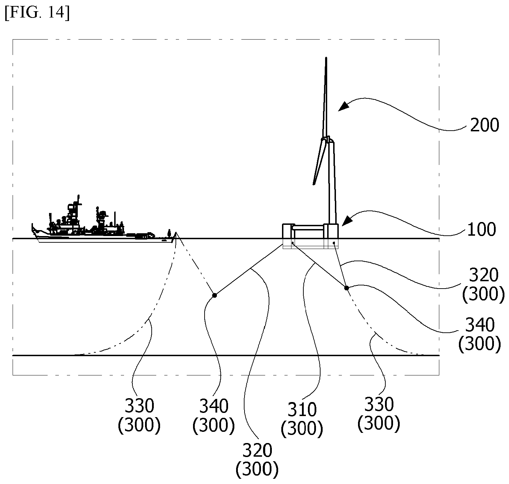

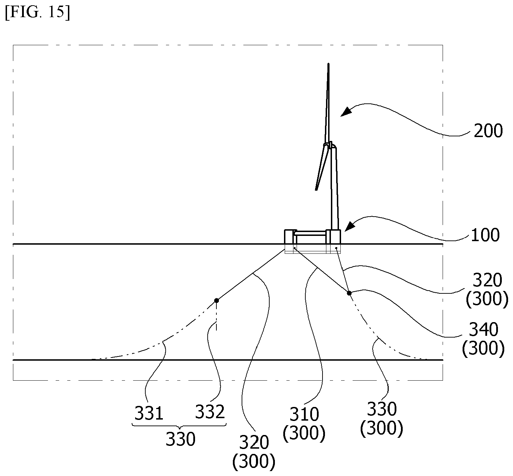

FIGS. 14 and 15 are views showing a process of connecting the third mooring line 330 to the first mooring unit 310 and the second mooring unit 320 of the remaining mooring unit 300 and then adjusting tension.

Referring to FIGS. 14 and 15, in a state in which the third mooring line 330 of the remaining one mooring unit has been connected to the connection portion 340, the tension of the mooring unit 300 may be adjusted by adjusting the length of the first area 331 and the length of the second area 332 of the third mooring line 330. When the tension of the mooring unit 300 is adjusted, the third mooring line 330 is partitioned into the first area 331 and the second area 332 with respect to the connection portion 340.

When the mooring work is finished, as shown in FIG. 3, the first mooring line 310, the second mooring line 320, and the third mooring line 330 are disposed to entirely have a Y-shape. There is an advantage that the mooring unit 300 can significantly reduce yaw motion during wind power generation.

The floating-type offshore wind power mooring system capable of reducing a yaw motion according to an exemplary embodiment of the present invention has been described above in detail with reference to the accompanying drawings.

The above-described embodiment of the present invention should be understood in all respects as illustrative and not restrictive, and the scope of the present invention will be determined by the claims to be described below rather than the above-described detailed description. In addition, not only the meanings and scopes of the claims but also all changeable or modifiable forms derived from the equivalent concept thereof should be construed as being included in the scope of the present invention.

## Claims

1. A floating-type offshore wind power mooring system capable of reducing a yaw motion, the floating-type offshore wind power mooring system comprising:
a floating body having buoyancy at sea; and
a wind power generation unit fixed to the floating body,
wherein the floating body includes three columns disposed at vertex locations of a triangle, respectively, and three pontoon units disposed in a triangular shape to connect the plurality of columns,
the wind power generation unit is disposed on any one of the three columns, and
includes a mooring unit connecting the column to a seabed,
the mooring unit includes a first mooring line, a second mooring line, a third mooring line, and a connection portion,
the first mooring line has one end connected to any one of the three columns,
the second mooring line has one end connected to another of the three columns,
the third mooring line has one end connected to the seabed,
the connection portion connects the other end of the first mooring line, the other end of the second mooring line, and the other end of the third mooring line, and
when viewed from above, the first mooring line, the second mooring line, and the third mooring line are disposed in a Y shape.

2. The floating-type offshore wind power mooring system of claim 1, wherein, with respect to a connection point connected to the connection portion, the third mooring line is partitioned into a first area from the seabed to the connection point, and a second area from the connection point to an end of the third mooring line, and
the third mooring line is coupled to the connection portion to change a length of the first area and a length of the second area.

3. The floating-type offshore wind power mooring system of claim 1, wherein a shape of the first mooring line and a shape of the second mooring line each differ from a shape of the third mooring line.

4. The floating-type offshore wind power mooring system of claim 3, wherein a length of the first mooring line and a length of the second mooring line are the same.

5. The floating-type offshore wind power mooring system of claim 1, wherein the mooring unit is disposed to correspond to each of the three pontoon units.

6. The floating-type offshore wind power mooring system of claim 1, wherein a cross section of the column is polygonal.
